(19) 

Europäisches
Patentamt
European
Patent Office
Office européen
des brevets

(11) **EP 4 119 930 B1**

(12) **EUROPEAN PATENT SPECIFICATION**

(45) Date of publication and mention
of the grant of the patent:
**17.01.2024   Bulletin 2024/03**

(21) Application number: **22182498.0**

(22) Date of filing: **01.07.2022**

(51) International Patent Classification (IPC):
***G01N 21/64*** *(2006.01)*

(52) Cooperative Patent Classification (CPC):
**G01N 21/6408**

(54) **METHOD FOR ESTIMATING FLUORESCENT SPECIES IN A FLUORESCENT SAMPLE AND SYSTEM CARRYING OUT THE METHOD**

VERFAHREN ZUR SCHÄTZUNG FLUORESZIERENDER SPEZIES IN EINER FLUORESZIERENDEN PROBE UND SYSTEM, DAS DAS VERFAHREN IMPLEMENTIERT

PROCÉDÉ D'ESTIMATION D'ESPÈCES FLUORESCENTES DANS UN ÉCHANTILLON FLUORESCENT ET SYSTÈME METTANT EN OEUVRE LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2021   IT 202100018590**

(43) Date of publication of application:
**18.01.2023   Bulletin 2023/03**

(73) Proprietor: **Flim Labs S.r.l.**
**00135 Roma (RM) (IT)**

(72) Inventor: **CASADEI, Marco**
**00135 Roma (IT)**

(74) Representative: **Tiburzi, Andrea et al**
**Barzanò & Zanardo Roma S.p.A.**
**Via Piemonte 26**
**00187 Roma (IT)**

(56) References cited:
**US-A1- 2012 276 578**

- **SCIPIONI LORENZO ET AL: "Phasor S-FLIM: a new paradigm for fast and robust spectral fluorescence lifetime imaging", NATURE METHODS, NATURE PUBLISHING GROUP US, NEW YORK, vol. 18, no. 5, 15 April 2021 (2021-04-15) , pages 542-550, XP037446127, ISSN: 1548-7091, DOI: 10.1038/S41592-021-01108-4 [retrieved on 2021-04-15] & SCIPIONI LORENZO ET AL: "Supplementary Information- Phasor S-FLIM: a new paradigm for fast and robust spectral fluorescence lifetime imaging", NATURE METHODS, vol. 18, no. 5, 15 April 2021 (2021-04-15) , pages 542-550, XP55973342, New York ISSN: 1548-7091, DOI: 10.1038/s41592-021-01108-4 internet [retrieved on 2022-10-20]**

**Description**

The present invention relates to a computational method for the analysis of the components of a fluorescent sample based on the lifetime of the fluorescence, in particular, based on the segmentation of the phasor space.

**Technical field**

In the following, the description will be directed to the determination of the primary components of a fluorescent sample, through the analysis of its fluorescence signal, but it should not be considered limited to this specific use.

In the acquisition of an unknown fluorescence signal, having a decay of the lifetime, which corresponds to a decay curve not attributable to an exponential curve with a single decay constant, it is usual to calculate the primary component of the lifetime or *lifetime* of the fluorescence, which contributed to the formation of the unknown signal.

Specifically, for these primary components, it is relevant to calculate the relative concentration and the lifetime of the fluorescence to which the decay curve corresponds.

In particular, it is well known how the phasors relating to the lifetime of single components of a fluorescent sample are arranged on the semicircle of the equation:

$$\frac{1}{2} = \sqrt{\left(g - \frac{1}{2}\right)^2 + s^2}$$

in a Cartesian reference with coordinates g (abscissae) and s (ordinates).

Consequently, when a fluorescent sample is composed of several components, the coordinate phasors (g, s) relating to the fluorescence signals emitted by the fluorescent sample will be arranged within said semicircle.

In particular, the coordinates (g, s) of the center of gravity of the fluorescence signals on the phasor plane will depend on the nature and the concentration of the single components in the fluorescent sample.

Currently, for this calculation, *fitting* the decay curve of the unknown fluorescence starting signal is used or known minimization algorithms are used.

Having fixed a number n of primary fluorescence components of the fluorescent sample, and having available the first n harmonic components of the fluorescence signal, it is possible, by means of a geometric minimization algorithm, to identify the primary components.

Said geometric algorithm consists, for each harmonic component, in the following steps.

For the first harmonic component of the n harmonics, the semicircle is segmented, i.e. divided into (k-1) segments.

A plurality of n-vertex polygons is generated, placing the vertices in n of the k points generated during segmentation.

For each newly generated polygon, the coordinates of the center of gravity are calculated and, subsequently, they are compared with the center of gravity coordinates of the acquired fluorescence signal.

If the distance between the two centers of gravity is greater than zero, the algorithm carries on by generating the next n-vertex polygon and comparing the coordinates of its center of gravity with the center of gravity of the acquired signal.

If, on the other hand, the distance between the two centers of gravity is zero, the algorithm passes to the next harmonic, starting again from the segmentation of the circumference, to pass then to the generation of the polygons and to the comparison of the coordinates of the centers of gravity with the center of gravity of the signal obtained.

It is clear that this algorithm is very expensive in terms of processing time, since, for each harmonic component of each acquired new signal, the algorithm performs the segmentation of the semicircle, the generation of every single polygon, and the comparison between the coordinates of the center of gravity of the polygon and of the center of gravity of the acquired signal. Moreover, both with the fitting and with the geometric minimization models, the computational cost and computational times can exceed 2-3 hours, since these methods described are based on iterative search techniques for optimal minima.

A further disadvantage of said algorithms and minimization methods is their poor accuracy, since, if the distance between the two centers of gravity is zero, the algorithm passes to the next harmonic, without verifying the existence of further possible solutions relating to the same harmonic.

US 2012/276578 A1 describes a label-free imaging method to monitor stem cell metabolism which discriminates different states of stem cell as they differentiate in a living tissue.

**Scope of the invention**

In the light of the above, the scope of the present invention is to provide an algorithm for calculating the primary components of a sample by means of fluorescence signals that is fast and reliable, as well as more accurate in determining the nature and concentration of the fluorescent species.

A further object of the present invention is to provide the tools necessary for carrying out the method and the apparatuses that carry out this method.

**Object of the invention**

It is, therefore, specific object of the present invention a method for estimating fluorescent species in a fluorescent sample capable of emitting a fluorescent signal, wherein said fluorescent signal can be represented through phasors, as defined in claim 1. The method comprises the following steps:

a. generating a semi circumference, associable to said fluorescent signal emitted by said fluorescent sample, on a Cartesian plane of coordinates in the phasor space;

b. defining a maximum number of primary components in which said fluorescent signal is to be divided;

c. defining, for a first number of components N=2 and for the first harmonic H=1, a plurality of points of coordinates $(g^{(1)}, s^{(1)})$ on said semi circumference;

d. for each of said components, generating a plurality of possible polygons whose vertices coincide with a number of points of said plurality of points equal to the number of components defined in said step c.;

e. calculating the coordinates (g',s') of the barycenter $B_P$ of each polygon of said plurality of possible polygons;

f. saving the vertices and the barycenter of all polygons of said plurality of possible polygons generated in said step d.;

g. repeating said steps d.-f. , for each harmonic following said first harmonic H = 1;

h. repeating said step g., for each number of components following said first number of components N=2;

i. acquiring said fluorescent signal;

j. defining the number of components in which said fluorescent signal is to be divided;

k. calculating the barycenter of said fluorescent signal in coordinates (g, s);

l. selecting the polygon of said plurality of polygons whose barycenter is at the minimum distance from said barycenter calculated in said step k.;

m. calculating the lifetimes of the primary components from the coordinates (g,s) of the vertices (V) of said polygon selected in said step 1.;

n. sending the values of the lifetimes, calculated in said step m., to said interface.

Preferred embodiments are defined in the dependent claims. In one embodiment, said step c. comprises the following sub-step:

c1. defining a series of points equidistant on the abscissa axis g and defining the corresponding ordinates s through the relation:

$$s = \sqrt{\frac{1}{4} - \left(g - \frac{1}{2}\right)^2}$$

Still according to another embodiment of the invention, said step d. comprises the following sub-steps:

d1. generating a plurality of possible polygons whose vertices have coordinates (g,s), calculated in said step c.;

d2. excluding the polygons with two or more coinciding vertices.

Always according to a further embodiment of the invention, said step e. comprises the following sub-steps:

e1. generating a series of possible concentrations between 0 and 1 of said primary components;

e2. for each polygon of said plurality of polygons, generating every possible combination $Q_{1,2,...,N}$ of N concentrations, generated in said step e1., such that:

$$Q_1 + Q_2 + \cdots + Q_N = 1$$

*e3.* for each possible combination $Q_{1,2,...,N}$ of N concentrations, generated in said step *e2.,* calculating the coordinates (g',s') of the associated barycenter $B_P$ through:

$$\begin{cases} g' = g_1 Q_1 + g_2 Q_2 + \cdots + g_N Q_N \\ s' = s_1 Q_1 + s_2 Q_2 + \cdots + s_N Q_N \end{cases}$$

where $(g_n, s_n)$ indicate the coordinates of the nth vertex.

According to one embodiment of the invention, said step *g.* comprises the following sub-steps:

*g1.* determining, starting from said plurality of points of coordinates $(g_{(1)}, s_{(1)})$ relative to said first harmonic H=1, on said semi circumference, the corresponding coordinates $(g_{(m)}, s_{(m)})$, where m is the number of harmonic currently used, by:

$$\begin{cases} g^{(m)} = \frac{m^2 g^{(1)}}{1+(m^2-1)g^{(1)}} \\ s^{(m)} = \sqrt{\frac{1}{4} - \left(g^{(m)} - \frac{1}{2}\right)^2} \end{cases}$$

*g2.* saving, for each repetition, therefore for each harmonic, the coordinates $(g_{(m)}, s_{(m)})$ of the relative vertices and the coordinates (g', s') of the respective barycenters in corresponding partitions of said memory.

Still according to another embodiment of the invention, said step *h.* comprises the following sub-step:
*h1.* saving, for each repetition, therefore for each number of components, the coordinates of the relative vertices and the coordinates $(g_{(m)}, s^{(m)})$ of the respective barycenters, where m is the number of the harmonic currently used, in corresponding partitions of said memory unit.

According to a further embodiment of the invention, said step *j.* comprises the following sub-steps:

*j1.* receiving from said interface the number of components in which said fluorescent signal is to be divided;
*j2.* dividing said fluorescent signal into a number of harmonics H = N.

According to one embodiment of the invention, said step *1.* comprises the following sub-steps:

$l_1$. defining a value defined by:

$$D = \sqrt{\left(B - B_P^{(1)}\right)^2 + \left(B - B_P^{(2)}\right)^2 + \cdots + \left(B - B_P^{(N)}\right)^2}$$

where $B_P^{(m)}$ indicates the barycenter of the polygon relative to the harmonic m;

$l_2$. calculating said value, defined in said step $l_1$., for each series of barycenters $B_P^{(1)}, B_P^{(2)}, ..., B_P^{(N)}$ ;

$l_3$. identifying at least one possible series of barycenters $B_P^{(1)}, B_P^{(2)}, ..., B_P^{(N)}$ which minimizes said value.

Preferably according to one embodiment of the invention, said step *m.* comprises one of the following sub-steps:

*m1.* for each vertex of coordinates $(g_n, s_n)$, of said at least one possible polygon, selected in said step *1.,* calculating the relative lifetime through:

$$\tau_n = \frac{1}{2\pi m \omega} \sqrt{(g_n^2 + s_n^2)^{-1} - 1}$$

where m is the number of harmonics currently used and $\omega$ is the frequency of a laser source, external to the system; or

*m2.* for each vertex of coordinates ($g_n$, $s_n$), of said at least one possible polygon, selected in said step *1.,* calculating the relative lifetime through:

$$\tau_n = \frac{1}{2\pi m\omega} \frac{s_n}{g_n}$$

where m is the number of harmonics currently used and ω is the frequency of a laser source, external to the system.

According to the invention, said steps *a.- h.* take place before said steps *i.- n.*

A further object of the present invention is a system configured to execute the method for estimating fluorescent species in a fluorescent sample, capable of acquiring a fluorescent signal emitted over time from a fluorescent sample, as defined in claim 11. The system comprises: a memory unit capable of storing the input data in different partitions; a logic control unit, operatively connected to said memory unit, capable of executing said steps *a.-n.* of said method starting from the data saved in said memory unit; and an interface, operatively connected to said logic control unit, capable of receiving the data calculated by said logic control unit and of visualizing said lifetimes.

A further object of the present invention is a computer program as defined in claim 12. The computer program comprises instructions which, when executed by a computer, cause the computer to carry out the steps of the method according to any one of claims 1-10.

It is also an object of the present invention a computer-readable medium, as defined in claim 13, comprising instructions which, when executed by a computer, cause the computer to carry out the steps of the method according to any one of the claims 1-10

**List of figures**

The present invention will be now described, for illustrative purposes, according to its preferred embodiments, with particular reference to the figures of the enclosed drawings, wherein:

figure 1 shows a fluorescence signal from which it is desired to separate the primary decay components of the fluorescence, in particular, the phasors for three harmonic components of the signal;
figure 2 shows the decomposition of each of the three harmonic components into three primary components, arranged on a semicircle on the plane of the phasors;

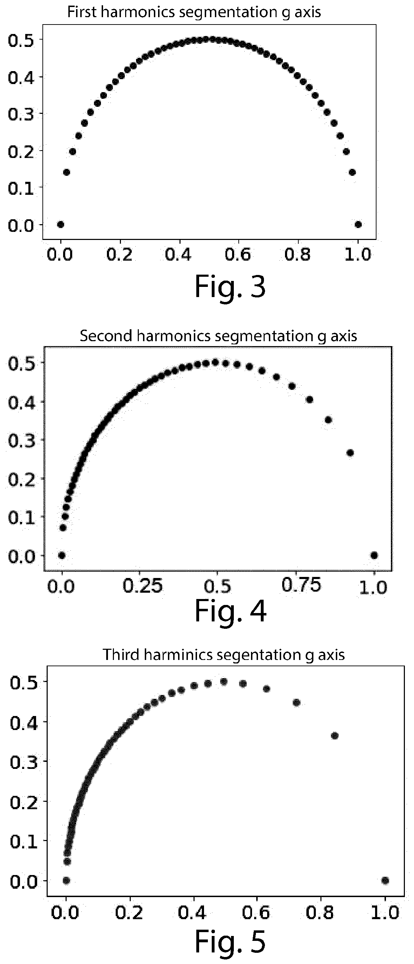

figure 3 shows a step of the method for estimating the fluorescent species of a fluorescent sample, object of the present invention, in particular the segmentation step of the semicircle relating to the first harmonic;
figure 4 shows a further step of the method object of the present invention, in particular the segmentation step of the semicircle relative to the second harmonic;
figure 5 shows a further step of the method object of the present invention, in particular the segmentation step of the semicircle relative to the third harmonic;
figure 6 shows a flow diagram of the steps of the method object of the present invention;
figure 7 shows a schematic view of the object system, which implements the method object of the present invention.

**Detailed description of the figures**

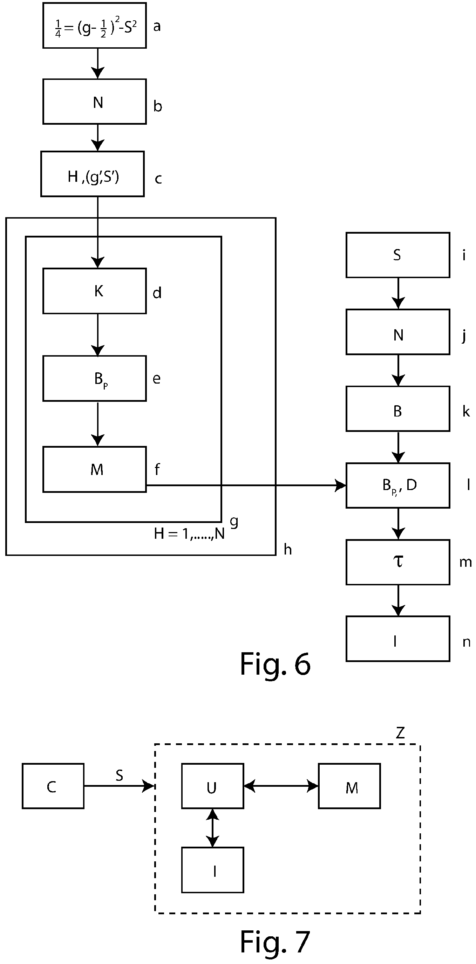

With reference to figure 7, the system Z object of the present invention comprises a logic control unit U, a memory unit M and an interface I.

Said memory unit M is capable of storing one or more series of data and making them accessible to said logic control unit U.

Said interface I is able to allow a user to interact with said system Z.

Said logic control unit U is able to receive said data present in said memory unit M, is able to receive the data entered by a user through said interface I and supply to said interface I the data requested by the user, and is able to carry out the steps of the method for estimating fluorescent species of a fluorescent sample C, object of the present invention.

When it is intended to analyze an unknown fluorescent sample C, acquiring the fluorescent signal S, emitted by it after being hit by a laser source, external to the system, and carrying out some processing, are needed.

In particular, the lifetimes of single components of a fluorescent sample C are characterized by the emission of fluorescent signals S, which can be represented on a decay histogram.

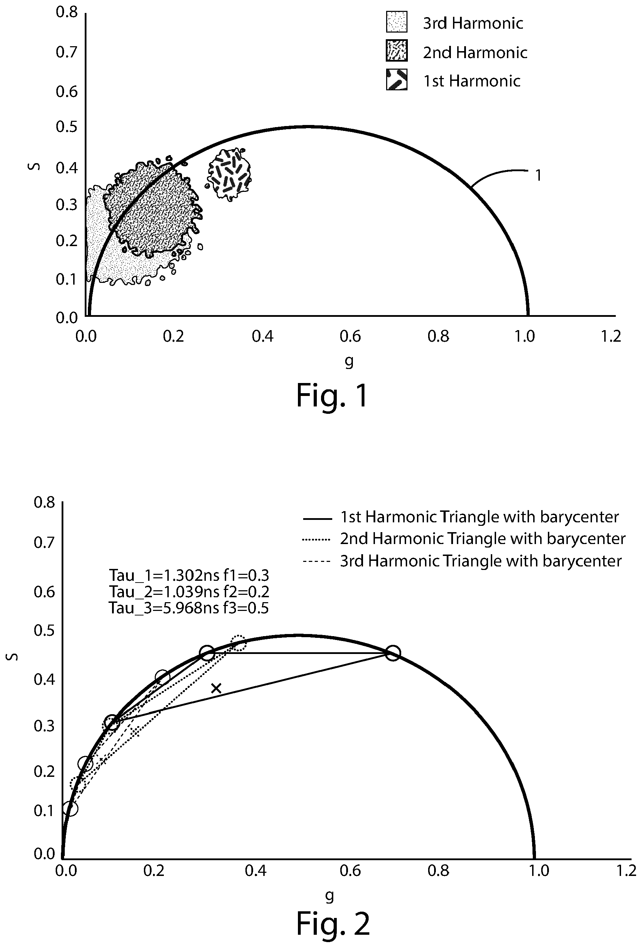

Said fluorescent signals S can then be transformed into coordinates (g, s) in the space of the phasors; in particular, with reference to figure 1, the coordinates (g, s) of said phasors F satisfy the equation:

$$\frac{1}{2} = \sqrt{\left(g - \frac{1}{2}\right)^2 + s^2} \; ; \; s \geq 0$$

and are therefore arranged on a semicircle 1 in the first quadrant.

In particular, said fluorescent signal S can be divided into a plurality of harmonics H.

When a fluorescent sample C is composed of several primary components, the phasors F with coordinates (g, s) relating to the fluorescent signals S emitted by the fluorescent sample C will arrange within said half-circle 1.

In particular, the coordinates of the center of gravity B of the fluorescent signals S within said half-circle 1 will depend on the nature and concentration of the individual components in the fluorescent sample C.

The method object of the present invention substantially comprises two macro-steps, a first macro-step for storing and collecting the preliminary data necessary to perform the estimate, and a second macro-step for carrying out the estimate.

The object of the present invention is in particular the first macro-step and the temporal order with which said macro-steps occur.

In particular, said first macro-step of the method consists of generating a plurality of polygons K having N vertices, which are points lying on said semicircle 1, where N is the number of primary components into which the fluorescent signal S is to be broken down.

In said second macro-step, the phasors F relating to the individual primary components of said fluorescent signal S and the relative concentrations Q are substantially estimated, using said plurality of polygons K generated in said first macro-step.

In particular, said first macro-step comprises the following steps:

a. generating said semicircle 1 on the Cartesian plane of coordinates (g, s) in the phasors space;
b. determining a maximum number of primary components N, into which it is intended to decompose said fluorescent signal S;
c. determining, for a first number of components N = 2 and for the first harmonic H = 1, a plurality of points P having coordinates $(g^{(1)}, s^{(1)})$ on said semicircle 1;
d. for each of said components N, generate a plurality of possible polygons K, whose vertices V coincide with a number of points of said plurality of points P equal to the number of components N determined in said step c.;
e. calculating the coordinates (g', s') of the center of gravity $B_P$ of each polygon of said plurality of possible polygons K;
f. storing the vertices V and the centroids $B_P$ of all the polygons of said plurality of possible polygons K generated in said step d. in said memory unit M;
g. repeating said steps d.-f., for each harmonic subsequent to said first harmonic H = 1;
h. repeating said step g., for each number of components N subsequent to said first number of components N = 2.

Said second macro-step includes the following sub-steps:

i. acquiring said fluorescent signal S;
j. determining the number of components N, into which to divide said fluorescent signal S;
k. calculating the center of gravity B of said fluorescent signal S in the coordinates (g, s);
l. selecting at least one possible polygon of said plurality of polygons K, whose center of gravity $B_P$ is at the minimum distance from said center of gravity B calculated in said step k.;
m. calculating the lifetimes $\tau$ of the N primary components starting from the coordinates (g, s) of the vertices V of said at least one possible polygon selected in said step l.;
n. sending the values of said lifetimes $\tau$, calculated in said step m., to said interface I.

In particular, said step c. of said first macro-step comprises the following sub-step:

c1. determining a series of points on the abscissa axis g and determining the corresponding ordinates s by means of the relation:

$$s = \sqrt{\frac{1}{4} - \left(g - \frac{1}{2}\right)^2}$$

Furthermore, said step d. of said first macro-step comprises the following sub-steps:

*d1.* generating a plurality of possible polygons K, whose vertices V have coordinates (g, s), calculated in said step *c.;*

*d2.* excluding polygons with two or more coincident V vertices.

Said step *e.* of said first macro-step comprises the following sub-steps:

*e1.* generating a series of possible concentrations Q comprised between 0 and 1 of said primary components;

*e2.* for each polygon of said plurality of polygons K, generating every possible combination $f_{1,2, \ldots, N}$ of N concentrations Q, generated in said step *e1.,* such that:

$$Q_1 + Q_2 + \ldots + Q_N = 1$$

*e3.* for each possible combination $Q_{1,2, \ldots, N}$ of N concentrations, generated in said step *e2.,* calculating the coordinates (g', s') of the center of gravity $B_P$ associated with them through:

$$\{g' = g_1 Q_1 + g_2 Q_2 + \cdots + g_N Q_N \quad s' = s_1 Q_1 + s_2 Q_2 + \cdots + s_N Q_N$$

where with $(g_n, s_n)$ the coordinates of the n-th vertex are indicated.

Said step *g.* of said first macro-step comprises the following sub-steps:

*g1.* determining, starting from said plurality of points P with coordinates $(g^{(1)}, s^{(1)})$ relative to said first harmonic H = 1, on said semicircle 1, the corresponding coordinates $(g^{(m)}, s^{(m)})$, where m is the harmonic number currently used, through:

$$\left\{ g^{(m)} = \frac{m^2 g^{(1)}}{1 + (m^2 - 1)g^{(1)}} \quad s^{(m)} = \sqrt{\frac{1}{4} - \left(g^{(m)} - \frac{1}{2}\right)^2} \right.$$

*g2.* storing, for each repetition, therefore for each harmonic H, the coordinates $(g^{(m)}, s^{(m)})$ of the relative vertices V and the coordinates (g', s') of the respective centers of gravity $B_P$ in corresponding partitions of said unit of memory M.

Said step *h.* of said first macro-step comprises the following sub-step:

*h1.* storing, for each repetition, therefore for each number of components N, the coordinates of the relative vertices V and the coordinates $(g^{(m)}, s^{(m)})$ of the respective centers of gravity $B_P$, where m is the number of harmonic currently used, in corresponding partitions of said memory unit M.

In particular, said step *j.* of said second macro-step comprises the following sub-steps:

*j1.* receiving from said interface I the number of components N, into which it is intended to divide said fluorescent signal S;

*j2.* subdividing said fluorescent signal S into a number of harmonics H = N.

Furthermore, said step *1.* of said second macro-step comprises the following sub-steps

*1..* defining a D value defined by:

$$D = \sqrt{\left(B - B_P^{(1)}\right)^2 + \left(B - B_P^{(2)}\right)^2 + \cdots + \left(B - B_P^{(N)}\right)^2}$$

where $B_P^{(m)}$ indicates the center of gravity $B_P$ of the polygon relative to the harmonic m;

*l2.* calculating said value D, defined in said step *1₁₁,* for each series of centroids $B_P^{(2)}, B_P^{(\ldots)}, B_P^{(N)}$ ;

*l3.* identify at least one possible series of centroids $B_P^{(1)}, B_P^{(2)}, \ldots, B_P^{(N)}$ , which minimizes said value D.

Said step *m.* of said second macro-step comprises one of the following sub-steps:

> *m1.* for each vertex of coordinates $(g_n, s_n)$, of said at least one possible polygon, selected in said calculating step 1., calculate the relative lifetime $\tau_n$ through:

$$\tau_n = \frac{1}{2\pi m\omega} \sqrt{(g_n^2 + s_n^2)^{-1} - 1}$$

where m is the harmonic number currently used and $\omega$ is the frequency of said laser source;

> *m2.* for each vertex of coordinates $(g_n, s_n)$, of said at least one possible polygon, selected in said calculating step 1., calculate the relative life time $\tau_n$ through:

$$\tau_n = \frac{1}{2\pi m\omega} \frac{s_n}{g_n}$$

where m is the harmonic number currently used and $\omega$ is the frequency of said laser source.

## Advantages

An advantage of the present invention is to provide a fast and reliable algorithm for calculating the primary components of a fluorescent sample by means of fluorescence signals.

A further advantage of the present invention is represented by the use of a computational method, which speeds up the computing capabilities of the system.

Another advantage of the present invention is the possibility of having a calculation algorithm that is accurate, since, given a fluorescent signal, it can offer more degenerate solutions.

The present invention has been described for illustrative purposes, according to its preferred embodiments, but it is to be understood that modifications and/or changes can be made by persons skilled in the art within the scope of the attached claims.

## Claims

1.  Method for estimating fluorescent species in a fluorescent sample (C) capable of emitting a fluorescent signal (S), wherein said fluorescent signal (S) can be represented through phasors (F), comprising the following steps:

    > *a.* generating a semi circumference (1), associable to said fluorescent signal (S) emitted by said fluorescent sample (C), on a Cartesian plane of coordinates (g, s) in the phasor space (F);
    > *b.* defining a maximum number of primary components (N) in which said fluorescent signal (S) is to be divided;
    > *c.* defining, for a first number of components N=2 and for the first harmonic H=1, a plurality of points (P) of coordinates $(g^{(1)}, s^{(1)})$ on said semi circumference (1) ;
    > *d.* for each of said components (N), generating a plurality of possible polygons (K) whose vertices (V) coincide with a number of points of said plurality of points (P) equal to the number of components (N) defined in said step *c.;*
    > *e.* calculating the coordinates (g',s') of the barycenter $(B_P)$ of each polygon of said plurality of possible polygons (K);
    > *f.* saving the vertices (V) and the barycenters $(B_P)$ of all polygons of said plurality of possible polygons (K) generated in said step *d.;*
    > *g.* repeating said steps *d.-f.* , for each harmonic following said first harmonic H = 1;
    > *h.* repeating said step *g.,* for each number of components (N) following said first number of components N=2;
    > *i.* acquiring said fluorescent signal (S);
    > *j.* defining the number of components (N) in which said fluorescent signal (S) is to be divided;
    > *k.* calculating the barycenter (B) of said fluorescent signal (S) in coordinates (g, s);
    > *l.* selecting the polygon of said plurality of polygons (K) whose barycenter $(B_P)$ is at the minimum distance from said barycenter (B) calculated in said step *k.;*
    > *m.* calculating the lifetimes ($\tau$) of the (N) primary components from the coordinates (g, s) of the vertices (V) of said polygon selected in said step *1.;*
    > *n.* sending the values of the lifetimes ($\tau$), calculated in said step *m.,* to said interface (I).

2. Method according to the preceding claim, **characterized in that** said step c. comprises the following sub-step:
c1. defining a series of points equidistant on the abscissa axis g and defining the corresponding ordinates s through the relation:

$$s = \sqrt{\frac{1}{4} - \left(g - \frac{1}{2}\right)^2}$$

3. Method according to any one of the preceding claims, **characterized in that** said step d. comprises the following sub-steps:

> d1. generating a plurality of possible polygons (K) whose vertices (V) have coordinates (g,s), calculated in said step c.;
> d2. excluding the polygons with two or more coinciding vertices (V).

4. Method according to any one of the preceding claims, **characterized in that** said step e. comprises the following sub-steps:

> e1. generating a series of possible concentrations (Q) between 0 and 1 of said primary components;
> e2. for each polygon of said plurality of polygons (K), generating every possible combination $Q_{1,2,...,N}$ of N concentrations (Q), generated in said step e1., such that:

$$Q_1 + Q_2 + \cdots + Q_N = 1$$

e3. for each possible combination $Q_{1,2,...,N}$ of N concentrations, generated in said step e2., calculating the coordinates (g',s') of the associated barycenter $B_P$ through:

$$\begin{cases} g' = g_1 Q_1 + g_2 Q_2 + \cdots + g_N Q_N \\ s' = s_1 Q_1 + s_2 Q_2 + \cdots + s_N Q_N \end{cases}$$

where $(g_n, s_n)$ indicate the coordinates of the nth vertex.

5. Method according to any one of the preceding claims, **characterized in that** said step g. comprises the following sub-steps:

> g1. determining, starting from said plurality of points (P) of coordinates $(g_{(1)}, s_{(1)})$ relative to said first harmonic H=1, on said semi circumference (1), the corresponding coordinates $(g_{(m)}, s_{(m)})$, where m is the number of harmonic currently used, by:

$$\begin{cases} g^{(m)} = \dfrac{m^2 g^{(1)}}{1 + (m^2 - 1) g^{(1)}} \\ s^{(m)} = \sqrt{\dfrac{1}{4} - \left(g^{(m)} - \dfrac{1}{2}\right)^2} \end{cases}$$

g2. saving, for each repetition, therefore for each harmonic (H), the coordinates $(g_{(m)}, s_{(m)})$ of the relative vertices (V) and the coordinates (g', s') of the respective barycenter $(B_P)$ in corresponding partitions of said memory (M).

6. Method according to any one of the preceding claims, **characterized in that** said step h. comprises the following sub-step:
h1. saving, for each repetition, therefore for each number of components (N), the coordinates of the relative vertices (V) and the coordinates $(g^{(m)}, s^{(m)})$ of the respective barycenter $(B_P)$, where m is the number of the harmonic currently used, in corresponding partitions of said memory unit (M).

7. Method according to any one of the preceding claims, **characterized in that** said step j. comprises the following sub-steps:

j1. receiving from said interface (I) the number of components (N) in which said fluorescent signal (S) is to be divided;

j2. dividing said fluorescent signal (S) into a number of harmonics H = N.

8.   Method according to any one of the preceding claims, **characterized in that** said step *1.* comprises the following sub-steps:

$l_1$. defining a value (D) defined by:

$$D = \sqrt{\left(B - B_P^{(1)}\right)^2 + \left(B - B_P^{(2)}\right)^2 + \cdots + \left(B - B_P^{(N)}\right)^2}$$

where $B_P^{(m)}$ indicates the barycenter ($B_P$) of the polygon relative to the harmonic m;

$l_2$. calculating said value (D), defined in said step $l_1$., for each series of barycenter $B_P^{(1)}, B_P^{(2)}, \ldots, B_P^{(N)}$ ;

$l_3$. identifying at least one possible series of barycenter $B_P^{(1)}, B_P^{(2)}, \ldots, B_P^{(N)}$ which minimizes said value (D) .

9.   Method according to any one of the preceding claims, **characterized in that** said step m. comprises one of the following sub-steps:

m1. for each vertex of coordinates ($g_n$, $s_n$), of said at least one possible polygon, selected in said step *1.*, calculating the relative lifetime ($\tau_n$) through:

$$\tau_n = \frac{1}{2\pi m \omega} \sqrt{(g_n^2 + s_n^2)^{-1} - 1}$$

where m is the number of harmonic currently used and $\omega$ is the frequency of a laser source, external to the system; or
m2. for each vertex of coordinates ($g_n$, $s_n$), of said at least one possible polygon, selected in said step *1.*, calculating the relative lifetime ($\tau_n$) through:

$$\tau_n = \frac{1}{2\pi m \omega} \frac{s_n}{g_n}$$

where m is the number of harmonic currently used and $\omega$ is the frequency of a laser source, external to the system.

10.  Method according to any one of the preceding claims, **characterized in that** said steps *a.- h.* take place before said steps *i.- n.*

11.  System (Z) configured to execute the method for estimating fluorescent species in a fluorescent sample (C), according to any one of claims 1-10, capable of acquiring a fluorescent signal (S) emitted over time from a fluorescent sample (C), comprising:

a memory unit (M) capable of storing the input data in different partitions;
a logic control unit (U), operatively connected to said memory unit (M), capable of executing said steps *a.-n.* of said method starting from the data saved in said memory unit (M); and
an interface (I), operatively connected to said logic control unit (U), capable of receiving the data calculated by said logic control unit (U) and of visualizing said lifetimes ($\tau$).

12.  Computer program comprising instructions which, when executed by a computer, cause the computer to carry out the steps of the method according to any one of claims 1-10.

**13.** Computer-readable instructions which, when executed by a computer, cause the computer to carry out the steps of the method according to any one of claims 1-10.

## Patentansprüche

**1.** Verfahren zur Schätzung fluoreszierender Spezies in einer fluoreszierenden Probe (C), die in der Lage ist, ein Fluoreszenzsignal (S) zu emittieren, wobei das Fluoreszenzsignal (S) durch Zeiger (F) dargestellt werden kann, umfassend die folgenden Schritte:

a. erzeugen eines Halbumfangs (1), der dem von der fluoreszierenden Probe (C) emittierten Fluoreszenzsignal (S) zuordenbar ist, auf einer kartesischen Koordinatenebene (g, s) im Zeigerraum (F);

b. definieren einer maximalen Anzahl von Primärkomponenten (N), in die das Fluoreszenzsignal (S) unterteilt werden soll;

c. definieren einer Vielzahl von Punkten (P) mit Koordinaten $(g^{(1)}, s^{(1)})$ auf dem Halbumfang (1) für eine erste Anzahl von Komponenten N=2 und für die erste Harmonische H=1;

d. erzeugen einer Vielzahl möglicher Polygone (K) für jede der Komponenten (N), deren Scheitelpunkte (V) mit einer Anzahl von Punkten der Vielzahl von Punkten (P) zusammenfallen, die der Anzahl der in dem Schritt definierten Komponenten (N) entspricht *c.;*

e. berechnen der Koordinaten (g', s') des Schwerpunkts ($B_P$) jedes Polygons der Vielzahl möglicher Polygone (K);

f. speichern der Eckpunkte (V) und der Schwerpunkte ($B_P$) aller Polygone der Vielzahl möglicher Polygone (K), die in Schritt *d.* erzeugt wurden;

g. wiederholen der Schritte *d.-f.* für jede Harmonische, die auf die erste Harmonische H = 1 folgt;

h. wiederholen des Schrittes *g.* für jede Anzahl von Komponenten (N), die auf die erste Anzahl von Komponenten N=2 folgt;

i. erfassen des Fluoreszenzsignals (S);

j. definieren der Anzahl der Komponenten (N), in die das Fluoreszenzsignal (S) unterteilt werden soll;

k. berechnen des Schwerpunkts (B) des Fluoreszenzsignals (S) in Koordinaten (g, s);

l. auswählen des Polygons aus der Vielzahl von Polygonen (K), dessen Schwerpunkt ($B_P$) den minimalen Abstand vom Schwerpunkt (B) hat, der in Schritt *k.* berechnet wurde;

m. berechnen der Lebensdauern ($\tau$) der (N) Primärkomponenten aus den Koordinaten (g, s) der Eckpunkte (V) des in Schritt *1.* ausgewählten Polygons;

n. Senden der im Schritt *m.* berechneten Werte der Lebensdauern ($\tau$) an die Schnittstelle (I).

**2.** Verfahren nach dem vorhergehenden Anspruch, **dadurch gekennzeichnet, dass** Schritt *c.* umfasst folgenden Teilschritt:

c1. definieren einer Reihe von Punkten mit gleichem Abstand auf der Abszissenachse g und Definieren der entsprechenden Ordinaten s durch die Beziehung:

$$ s = \sqrt{\frac{1}{4} - \left(g - \frac{1}{2}\right)^2} $$

**3.** Verfahren nach einem der vorhergehenden Ansprüche, **dadurch gekennzeichnet, dass** Schritt *d.* umfasst folgende Teilschritte:

d1. erzeugen einer Vielzahl möglicher Polygone (K), deren Eckpunkte (V) Koordinaten (g,s) haben, die in Schritt c. berechnet wurden;

d2. ausgenommen sind die Polygone mit zwei oder mehr zusammenfallenden Eckpunkten (V).

**4.** Verfahren nach einem der vorhergehenden Ansprüche, **dadurch gekennzeichnet, dass** Schritt e. umfasst folgende Teilschritte:

e1. erzeugen einer Reihe möglicher Konzentrationen (Q) zwischen 0 und 1 der Primärkomponenten;

e2. für jedes Polygon der Vielzahl von Polygonen (K), Erzeugen jeder möglichen Kombination $Q_{1,2,...,N}$ von N Konzentrationen (Q), die in Schritt *e1.* generiert wurden, so dass:

$$Q_1 + Q_2 + \cdots + Q_N = 1$$

*e3.* für jede mögliche Kombination $Q_{1,2,\ldots,N}$ von N-Konzentrationen, die in Schritt *e2* erzeugt wurde, Berechnen der Koordinaten (g' ,s') des zugehörigen Schwerpunkts BP durch:

$$\begin{cases} g' = g_1 Q_1 + g_2 Q_2 + \cdots + g_N Q_N \\ s' = s_1 Q_1 + s_2 Q_2 + \cdots + s_N Q_N \end{cases}$$

wobei $(g_n, s_n)$ die Koordinaten des n-ten Scheitelpunkts angeben.

**5.** Verfahren nach einem der vorhergehenden Ansprüche, **dadurch gekennzeichnet, dass** Schritt *g.* umfasst folgende Teilschritte:

*g1.* bestimmen, ausgehend von der Vielzahl von Punkten (P) mit Koordinaten $(g_{(1)}, s_{(1)})$ relativ zur ersten Harmonischen H=1, auf dem Halbumfang (1), der entsprechenden Koordinaten $(g_{(m)}, s_{(m)})$, wobei m die Anzahl der aktuell verwendeten Harmonischen ist, durch:

$$\begin{cases} g^{(m)} = \dfrac{m^2 g^{(1)}}{1+(m^2-1)g^{(1)}} \\ s^{(m)} = \sqrt{\dfrac{1}{4} - \left(g^{(m)} - \dfrac{1}{2}\right)^2} \end{cases}$$

*g2.* speichern, für jede Wiederholung, also für jede Harmonische (H), die Koordinaten $(g_{(m)}, s_{(m)})$ der relativen Eckpunkte (V) und die Koordinaten (g', s') des jeweiligen Schwerpunkts ($B_P$) in entsprechenden Partitionen des Speichers (M).

**6.** Verfahren nach einem der vorhergehenden Ansprüche, **dadurch gekennzeichnet, dass** Schritt *h.* umfasst folgenden Teilschritt:
*h1.* speichern, für jede Wiederholung, also für jede Anzahl von Komponenten (N), der Koordinaten der relativen Eckpunkte (V) und der Koordinaten $(g^{(m)}, s^{(m)})$ des jeweiligen Schwerpunkts ($B_P$), wobei m ist die Nummer der aktuell verwendeten Harmonischen in entsprechenden Partitionen der Speichereinheit (M).

**7.** Verfahren nach einem der vorhergehenden Ansprüche, **dadurch gekennzeichnet, dass** Schritt j. umfasst folgende Teilschritte:

*j1.* empfangen der Anzahl von Komponenten (N), in die das Fluoreszenzsignal (S) unterteilt werden soll, von der Schnittstelle (I);
*j2.* aufteilen des Fluoreszenzsignals (S) in eine Anzahl von Harmonischen H = N.

**8.** Verfahren nach einem der vorhergehenden Ansprüche, **dadurch gekennzeichnet, dass** der Schritt *1.* die folgenden Unterschritte umfasst:

$l_1.$ definieren eines Werts (D), definiert durch:

$$D = \sqrt{\left(B - B_P^{(1)}\right)^2 + \left(B - B_P^{(2)}\right)^2 + \cdots + \left(B - B_P^{(N)}\right)^2}$$

wobei $B_P^{(m)}$ den Schwerpunkt ($B_P$) des Polygons relativ zur Harmonischen m angibt;
$l_2.$ berechnen des in Schritt $l_1.$ definierten Wertes (D) für jede Reihe von Schwerpunkten

$$B_P^{(1)}, \quad B_P^{(2)}, \ldots, \quad B_P^{(N)};$$

$l_3$. identifizieren mindestens einer möglichen Reihe von Schwerpunkten $B_P^{(1)}$, $B_P^{(2)}$, ..., $B_P^{(N)}$, die den Wert (D) minimiert.

**9.** Verfahren nach einem der vorhergehenden Ansprüche, **dadurch gekennzeichnet, dass** Schritt *m.* umfasst einen der folgenden Teilschritte:

*m1.* für jeden Koordinatenscheitelpunkt ($g_n$, $s_n$) des mindestens einen möglichen Polygons, das in Schritt *1.* ausgewählt wurde, Berechnen der relativen Lebensdauer ($\tau_n$) durch:

$$\tau_n = \frac{1}{2\pi m\omega}\sqrt{(g_n^2 + s_n^2)^{-1} - 1}$$

dabei ist m die Zahl der aktuell verwendeten Harmonischen und $\omega$ die Frequenz einer Laserquelle außerhalb des Systems; oder

*m2.* berechnen der relativen Lebensdauer ($\tau_n$) für jeden Koordinatenscheitelpunkt ($g_n$, $s_n$) des mindestens einen möglichen Polygons, das in Schritt *1.* ausgewählt wurde, durch:

$$\tau_n = \frac{1}{2\pi m\omega}\frac{s_n}{g_n}$$

dabei ist m die Anzahl der aktuell verwendeten Harmonischen und $\omega$ die Frequenz einer Laserquelle außerhalb des Systems.

**10.** Verfahren nach einem der vorhergehenden Ansprüche, **dadurch gekennzeichnet, dass** die Schritte *a.- h.* erfolgen, bevor die genannten Schritte *i.- n.*

**11.** System (Z), das zur Durchführung des Verfahrens zur Schätzung fluoreszierender Spezies in einer fluoreszierenden Probe (C) nach einem der Ansprüche 1-10 konfiguriert ist und in der Lage ist, ein Fluoreszenzsignal (S) zu erfassen, das im Laufe der Zeit von einer fluoreszierenden Probe emittiert wird (C), bestehend aus: eine Speichereinheit (M), die die Eingabedaten in verschiedenen Partitionen speichern kann; eine logische Steuereinheit (U), die operativ mit der Speichereinheit (M) verbunden ist und in der Lage ist, die Schritte *a.-n.* auszuführen. des Verfahrens ausgehend von den in der Speichereinheit (M) gespeicherten Daten; und eine Schnittstelle (I), die operativ mit der Logiksteuereinheit (U) verbunden ist und die von der Logiksteuereinheit (U) berechneten Daten empfangen und die Lebensdauern ($\tau$) visualisieren kann.

**12.** Computerprogramm, das Anweisungen umfasst, die, wenn sie von einem Computer ausgeführt werden, den Computer veranlassen, die Schritte des Verfahrens nach einem der Ansprüche 1-10 auszuführen.

**13.** Computerlesbare Anweisungen, die bei Ausführung durch einen Computer den Computer veranlassen, die Schritte des Verfahrens nach einem der Ansprüche 1-10 auszuführen.

## Revendications

**1.** Méthode d'estimation des espèces fluorescentes dans un échantillon fluorescent (C) capable d'émettre un signal fluorescent (S), dans lequel ledit signal fluorescent (S) peut être représenté par des phaseurs (F), comprenant les étapes suivantes:

a. générer une demi-circonférence (1), associable audit signal fluorescent (S) émis par ledit échantillon fluorescent (C), sur un plan cartésien de coordonnées (g, s) dans l'espace des phaseurs (F);
b. définir un nombre maximal de composantes primaires (N) dans lesquelles ledit signal fluorescent (S) doit être divisé;

*c.* définir, pour un premier nombre de composantes N=2 et pour la première harmonique H=1, une pluralité de points (P) de coordonnées ($g^{(1)}$, $s^{(1)}$) sur ladite demi-circonférence (1);

*d.* pour chacune desdites composantes (N), générer une pluralité de polygones possibles (K) dont les sommets (V) coïncident avec un nombre de points de ladite pluralité de points (P) égal au nombre de composantes (N) défini dans ladite étape *c.;*

*e.* calculer les coordonnées (g', s') du barycentre ($B_P$) de chaque polygone de la pluralité de polygones possibles (K);

*f.* enregistrer les sommets (V) et les barycentres ($B_P$) de tous les polygones de ladite pluralité de polygones possibles (K) générés dans ladite étape *d.;*

*g.* répéter lesdites étapes *d.-f.,* pour chaque harmonique suivant ladite première harmonique H = 1;

*h.* répéter ladite étape *g.,* pour chaque nombre de composants (N) suivant ledit premier nombre de composants N=2;

*i.* acquérir ledit signal fluorescent (S);

*j.* définir le nombre de composantes (N) dans lesquelles ledit signal fluorescent (S) doit être divisé;

*k.* calculer le barycentre (B) dudit signal fluorescent (S) en coordonnées (g, s);

*l.* sélectionner le polygone de ladite pluralité de polygones (K) dont le barycentre ($B_P$) se trouve à la distance minimale dudit barycentre (B) calculé à ladite étape *k.;*

*m.* calculer les durées de vie ($\tau$) des (N) composants primaires à partir des coordonnées (g, s) des sommets (V) dudit polygone sélectionné lors de ladite étape *1.;*

*n.* envoyer les valeurs des durées de vie ($\tau$), calculées à ladite étape *m.,* à ladite interface (I).

2. Méthode selon la revendication précédente, **caractérisée en ce que** ladite étape *c.* comprend la sous-étape suivante:
   *c1.* définir une série de points équidistants sur l'axe des abscisses g et définir les ordonnées s correspondantes par la relation:

$$s = \sqrt{\frac{1}{4} - \left(g - \frac{1}{2}\right)^2}$$

3. Méthode selon l'une quelconque des revendications précédentes, **caractérisée en ce que** ladite étape d. comprend les sous-étapes suivantes:

   *d1.* générer une pluralité de polygones possibles (K) dont les sommets (V) ont des coordonnées (g,s), calculées dans ladite étape *c.;*
   *d2.* exclure les polygones dont deux ou plusieurs sommets coïncident (V).

4. Méthode selon l'une quelconque des revendications précédentes, **caractérisée en ce que** ladite étape *e.* comprend les sous-étapes suivantes:

   *e1.* générer une série de concentrations possibles (Q) entre 0 et 1 desdits composants primaires;
   *e2.* pour chaque polygone de ladite pluralité de polygones (K), générer toutes les combinaisons possibles $Q_{1,2,...,N}$ de N concentrations (Q), générées dans ladite étape *e1.,* telles que:

$$Q_1 + Q_2 + \cdots + Q_N = 1$$

   *e3.* pour chaque combinaison possible $Q_{1,2,...,N}$ de N concentrations, générée dans ladite étape e2, calculer les coordonnées (g' ,s') du barycentre $B_P$ à travers:

$$\begin{cases} g' = g_1 Q_1 + g_2 Q_2 + \cdots + g_N Q_N \\ s' = s_1 Q_1 + s_2 Q_2 + \cdots + s_N Q_N \end{cases}$$

   où ($g_n$,$s_n$) indiquent les coordonnées du nième sommet.

5. Méthode selon l'une quelconque des revendications précédentes, **caractérisée en ce que** ladite étape *g.* comprend les sous-étapes suivantes:

*g1.* déterminer, à partir de ladite pluralité de points (P) de coordonnées $(g_{(1)}, s_{(1)})$ relatives à ladite première harmonique H=1, sur ladite demi-circonférence (1), les coordonnées correspondantes $(g_{(m)}, s_{(m)})$, où m est le nombre d'harmoniques actuellement utilisées, par:

$$\begin{cases} g^{(m)} = \frac{m^2 g^{(1)}}{1+(m^2-1)g^{(1)}} \\ s^{(m)} = \sqrt{\frac{1}{4} - \left(g^{(m)} - \frac{1}{2}\right)^2} \end{cases}$$

*g2.* enregistrer, pour chaque répétition, donc pour chaque harmonique (H), les coordonnées $(g_{(m)}, s_{(m)})$ des sommets relatifs (V) et les coordonnées (g', s') du barycentre respectif $(B_P)$ dans les partitions correspondantes de ladite mémoire (M).

**6.** Méthode selon l'une quelconque des revendications précédentes, **caractérisée en ce que** ladite étape *h.* comprend la sous-étape suivante:
*h1.* enregistrer, pour chaque répétition, donc pour chaque nombre de composantes (N), les coordonnées des sommets relatifs (V) et les coordonnées $(g^{(m)}, s^{(m)})$ du barycentre respectif $(B_P)$, où m est le numéro de l'harmonique actuellement utilisée, dans les partitions correspondantes de ladite unité de mémoire (M).

**7.** Méthode selon l'une quelconque des revendications précédentes, **caractérisée en ce que** ladite étape *j.* comprend les sous-étapes suivantes:

*j1.* recevoir de ladite interface (I) le nombre de composantes (N) dans lesquelles ledit signal fluorescent (S) doit être divisé;
*j2.* diviser ledit signal fluorescent (S) en un certain nombre d'harmoniques H = N.

**8.** Méthode selon l'une quelconque des revendications précédentes, **caractérisée en ce que** ladite étape *1.* comprend les sous-étapes suivantes:

$l_1.$ définir une valeur (D) définie par:

$$D = \sqrt{\left(B - B_P^{(1)}\right)^2 + \left(B - B_P^{(2)}\right)^2 + \cdots + \left(B - B_P^{(N)}\right)^2}$$

Où $B_P^{(m)}$ indique le barycentre $(B_P)$ du polygone par rapport à l'harmonique m;
$l_2.$ calculer ladite valeur (D), définie à ladite étape $l_1.$, pour chaque série de barycentre $B_P^{(1)}, B_P^{(2)}, \ldots, B_P^{(N)}$;

$l_3.$ identifier au moins une série possible de barycentres $B_P^{(1)}, B_P^{(2)}, \ldots, B_P^{(N)}$ qui minimise ladite valeur (D).

**9.** Méthode selon l'une quelconque des revendications précédentes, **caractérisée en ce que** ladite étape *m.* comprend l'une des sous-étapes suivantes:

*m1.* pour chaque sommet de coordonnées $(g_n, s_n)$, dudit au moins un polygone possible, sélectionné dans ladite étape *1.*, calculer la durée de vie relative $(\tau_n)$ à travers:

$$\tau_n = \frac{1}{2\pi m \omega} \sqrt{(g_n^2 + s_n^2)^{-1} - 1}$$

où m est le nombre d'harmoniques actuellement utilisées et $\omega$ est la fréquence d'une source laser externe au système; ou
*m2.* pour chaque sommet de coordonnées $(g_n, s_n)$, dudit au moins un polygone possible, sélectionné dans ladite étape *l.*, calculer la durée de vie relative ($\tau_n$) à travers:

$$\tau_n = \frac{1}{2\pi m\omega}\frac{s_n}{g_n}$$

où m est le nombre d'harmoniques actuellement utilisées et $\omega$ est la fréquence d'une source laser externe au système.

10. Méthode selon l'une quelconque des revendications précédentes, **caractérisée par le fait que** les étapes *a.- h.* se déroulent avant les étapes *i.- n.*

11. Système (Z) configuré pour exécuter la méthode d'estimation des espèces fluorescentes dans un échantillon fluorescent (C), selon l'une quelconque des revendications 1 à 10, capable d'acquérir un signal fluorescent (S) émis au cours du temps à partir d'un échantillon fluorescent (C), comprenant: une unité de mémoire (M) capable de stocker les données d'entrée dans différentes partitions; une unité de commande logique (U), connectée de manière opérationnelle à ladite unité de mémoire (M), capable d'exécuter lesdites étapes *a.-n.* de ladite méthode à partir des données sauvegardées dans ladite unité de mémoire (M) ; et une interface (I), connectée de manière opérationnelle à ladite unité de commande logique (U), capable de recevoir les données calculées par ladite unité de commande logique (U) et de visualiser lesdites durées de vie ($\tau$).

12. Programme informatique comprenant des instructions qui, lorsqu'elles sont exécutées par un ordinateur, permettent à ce dernier d'exécuter les étapes de la méthode selon l'une des revendications 1 à 10.

13. Instructions lisibles par ordinateur qui, lorsqu'elles sont exécutées par un ordinateur, permettent à ce dernier d'exécuter les étapes de la méthode décrite dans l'une des revendications 1 à 10.

Fig. 1

Fig. 2

First harmonics segmentation g axis

Fig. 3

Second harmonics segmentation g axis

Fig. 4

Third harminics segentation g axis

Fig. 5

$$\tfrac{1}{4} = (g - \tfrac{1}{2})^2 - S^2 \quad a$$

N  b

H ,(g',S')  c

K  d

$B_P$  e

M  f

H = 1,.....,N  g

h

S  i

N  j

B  k

$B_{P,}$, D  l

$\tau$  m

I  n

## Fig. 6

C  —S→  U ↔ M

I

Z

## Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012276578 A1